# EUROPÄISCHE PATENTSCHRIFT

(11) **EP 2 547 245 B1**
(45) Veröffentlichungstag und Bekanntmachung des Hinweises auf die Patenterteilung: **26.04.2017**
(21) Anmeldenummer: 11708676.9
(22) Anmeldetag: 09.03.2011
(51) Int. Cl.: A47K 11/02

(54) **WASSERLOSES TOILETTENSYSTEM**
WATERLESS TOILET SYSTEM
SYSTÈME DE TOILETTES SANS EAU

(30) Priorität: 07.12.2010 CH 20472010; 18.03.2010 CH 410102010
(43) Veröffentlichungstag der Anmeldung: 23.01.2013
(73) Patentinhaber: LIFTAC AG, 9494 Schaan (LI)
(72) Erfinder: LÜSCHER, Claude, CH-8008 Zürich (CH); FURSTOS, Julien, F-68870 Bartenheim (FR)
(74) Vertreter: Rentsch Partner AG
(86) Internationale Anmeldenummer: PCT/CH2011/000044
(87) Internationale Veröffentlichungsnummer: WO 2011/113164

(56) Entgegenhaltungen:
- EP-A2- 2 223 643
- WO-A2-2009/129638
- DE-A1- 2 457 093

## Beschreibung

### Technisches Gebiet

Die Erfindung betrifft wasserlose Toilettenvorrichtungen gemäss dem Oberbegriff des unabhängigen Patentanspruchs.

### Stand der Technik

In der heutigen Zeit werden fäkalienbelastete Abwässer in der Regel via die Kanalisation der Reinigung in einer Kläranlage zugeführt. Bei fehlendem Kanalisationsanschluss können die Abwässer in Tanks gesammelt und anschliessend abtransportiert werden. Problematisch sind diese herkömmlichen Toilettenvorrichtungen mit Kanalisationsanschluss, wenn Abwässer aufgrund menschlicher Ausscheidungen stark mit problematischen Substanzen wie Abbauprodukten von Medikamenten belastet sind. Dies ist zum Beispiel regelmässig der Fall in Krankenhäusern. Solche Abwässer können die Biologie von Kläranlagen unter Umständen stark schädigen, was wiederum negative Auswirkungen auf die Qualität der Reinigungswirkung hat. Gewisse Substanzklassen können zudem nur beschränkt oder gar nicht aus dem Abwasser entfernt werden und gelangen so in den natürlichen Wasserkreislauf, wo sie eine schädliche Wirkung entfalten können. Für solche Anwendungen wären an und für sich wasserlose Toilettensysteme geeigneter, welche es erlauben, die anfallenden belasteten Abfallmaterialien umweltgerecht zu entsorgen, beispielsweise durch Verbrennen.

Eine weitere Anwendung von wasserlosen Toilettensystem sind Orte mit beschränkter oder überhaupt keiner Fliesswasserversorgung oder ohne Kanalisationsanschluss, sowie Fahrzeuge, beispielsweise Reisebusse und Eisenbahnwaggons, und Flugzeuge, bei welchen die für herkömmliche Toilettensysteme benötigten Spülwassermengen Gewichts- und Kostenprobleme verursachen, und/oder die entsprechenden Vorratstanks und Auffangvorrichtung zu viel Volumen benötigen.

Bei einem bekannten Typ von wasserlosen Toilettensystemen werden die Ausscheidungsprodukte in einem Tank aufgefangen und mit Chemikalien behandelt, um diese zu desinfizieren und Geruchsbildung zu verhindern. Auf diese Weise wird sehr viel Spülwasser gespart, jedoch sind solche chemischen Toiletten kostenintensiv und ökologisch problematisch.

Ebenfalls bekannt sind Toilettensysteme, bei welchem die anfallenden Ausscheidungsprodukte biologisch aufgearbeitet und entsorgt werden. Solche Systeme sind jedoch eher aufwendig zu warten und erlauben nur eine geringe Benutzungsfrequenz. Sie benötigen auch viel Platz.

Weit verbreitet, insbesondere für Anwendungen in Flugzeugen, sind Vakuum-Toiletten-Systeme, bei denen die Fäkalien aus der Toilettenschüssel mit Hilfe eines Vakuums abgezogen werden. Auf diese Weise muss nur wenig Spülwasser verwendet werden. Voraussetzung für solche Systeme ist das Vorhandensein eines Vakuumsystems. Solche Anlagen sind wartungsintensiv und störungsanfällig. Zudem sind auch bei Vakuumtoiletten geringe Mengen an Spülwasser für die Reinigung der Toilettenschüssel notwendig, was für längere Flüge trotzdem grosse Mengen an Spülwasser erfordert.

DE102006029800 beschreibt ein vakuumbasiertes wasserloses Toilettensystem, bei welchem ab Rolle ein Folienabschnitt über eine Schüssel gezogen und mittels Vakuum angesaugt wird, sodass die Schüssel mit der Folie ausgekleidet ist. Nach der Benutzung wird die Folie mitsamt Inhalt über ein herkömmliches Vakuumtoilettensystem abgesaugt. Dies vermeidet die Verwendung von Spülwasser, löst aber nicht die grundlegenden Probleme von Vakuumtoilettensystemen.

US 3457567 beschreibt ebenfalls eine wasserlose Toilette, bei welcher ein einzelner Sammelbeutel in einer Schüssel angeordnet wird. Nach Benutzung des Systems wird der Beutel nach unten abgesenkt, verschlossen und mittels Vakuum in einen Sammelbehälter gefördert.

In US 3401409 ist ein wasserloses Toilettensystem beschrieben bei dem ein Sammelbeutel, welcher zuvor in einer Haltevorrichtung aufgespannt worden ist, als Toilettenschüssel dient. Anschliessend betätigt der Benutzer einen Mechanismus, welcher den Beutel verschliesst, und in einen Sammelbehälter fallen lässt. Der Benutzer muss vor jeder Benutzung einen Beutel montieren, was aufwendig und risikobehaftet ist. Der Toilettenring muss wie bei einer herkömmlichen Toilette gereinigt werden. Da die Auffangvorrichtung sich unterhalb des Toilettensitzes befindet, ist die Speicherkapazität des Toilettensystems gering.

FR 2090838 zeigt ein Toilettensystem für Fahrzeuge, bei welchem in einer Toilettenschüssel ein Folienbeutel angeordnet wird. Nach Benutzung der Toilette wird der Beutel in einen Sammelbehälter befördert, während gleichzeitig die Schüssel durch Spülen mit Wasser gereinigt wird. Dieses wenig verschmutzte Wasser wird getrennt abgeleitet. Dieses Toilettensystem eignet sich nicht für einen mobilen Einsatz.

Aus GB 2409866 A ist ein Trockentoiletten-System bekannt, bei welchem eine schlauchförmige Endlosfolie in einem Auffangtrichter unter dem Sitz der Toilette angeordnet und am trichterausgangsseitigen Ende versiegelt ist, um einen einseitig geschlossenen Beutel zu bilden. Nach der Benutzung der Toilette wird die Folie von oben nach unten nachgefördert, so dass sich die verschmutze Folie und der mit Fäkalien oder Urin gefüllte Beutel aufgrund der Gravitation in einer Auffangvorrichtung unterhalb des Trichters bewegen. Der Schlauch wird dann zu einem Beutel verschlossen, wobei dabei gleichzeitig oben im System der nächste offene Beutel gebildet wird. Es resultiert eine Kette von mit Fäkalien/Urin gefüllten Beuteln, die in einer Auffangvorrichtung unterhalb des Toilettensitzes aufgefangen werden. Entsprechend ist die Bauhöhe einer solchen Toilette ungünstig hoch oder es steht nur ein kleines Auffangvolumen zur Verfügung.

GB 2160417 A zeigt ein ähnliches System, bei dem nach der Benutzung die verbrauchte Folie durch zwei Klemmen vorübergehend zusammengepresst und damit gegen die Toilettenschüssel hin versiegelt wird. Der gefüllte, nicht unterteilte Schlauch wird in einer Auffangvorrichtung unterhalb der Toilette gesammelt. Dieses System dient primär der Sauberhaltung der Toilettenschüssel. Die Fäkalien müssen normal entsorgt werden, da der Schlauch nicht verschlossen ist. Die Entsorgung wird durch den Schlauch sogar noch erschwert, da er nicht mit in die Kanalisation entsorgt werden kann.

Bei der Toilettenvorrichtung aus WO 2009/1 29638 A2 ist unter einem Toilettensitz ein zur Aufnahme von Fäkalien und Urin vorgesehener Folienschlauch angeordnet, sowie eine Verschliessvorrichtung, mit welchem der Folienschlauch in bestimmten Abständen zu einem geschlossenen Beutel verschliessbar ist. Mit einem Fördersystem wird der geschlossene Beutel in einen neben dem Toilettensitz angeordneten Auffangbehälter befördert. Vorzugsweise wird beim Verschliessen des Folienschlauchs eine Kette von Beuteln erzeugt, die mit dem Fördersystem fortlaufend in den Auffangbehälter befördert wird.

### Aufgabe der Erfindung

Aufgabe der Erfindung ist es, eine wasserlose Toilettenvorrichtung zur Verfügung zu stellen, welche die oben erwähnten und andere Nachteile nicht aufweist. Insbesondere soll eine erfindungsgemässe Toilettenvorrichtung eine von den übrigen Abwässern getrennte Entsorgung von menschlichen Ausscheidungen ermöglichen. Sie soll weiter kostengünstig herstellbar und betreibbar sein sowie geringen Unterhaltsaufwand erfordern.

Eine andere Aufgabe der Erfindung ist es, eine Toilettenvorrichtung zur Verfügung zu stellen, welche eine kompakte und leichte Bauweise ermöglicht, und kein Wasser für den Betrieb benötigt. Sie soll sowohl fest montierbar als auch mobil, z.B. auf Rollen frei verschiebbar, ausgelegt werden können.

Eine weitere Aufgabe der Erfindung besteht darin, eine Toilettenvorrichtung zur Verfügung zu stellen, welche möglichst wenig Reinigungsaufwand verursacht, und so kosteneffizient betrieben werden kann. Auch die Reinigung aufgrund einer Verschmutzung durch eine unsachgemässe Benutzung soll effizient durchführbar sein. Alle für einen Benutzer direkt oder indirekt verschmutzbaren Teile sollen leicht zugänglich und so einfach zu reinigen sind.

Eine zusätzliche Aufgabe der Erfindung ist schliesslich, eine Toilettenvorrichtung zur Verfügung zu stellen, die an die individuellen Bedürfnisse eines Benutzers, beispielsweise an seine Körpergrösse oder an seine körperliche Beweglichkeit anpassbar ist. Bevorzugt soll eine solche Toilettenvorrichtung es einem Menschen mit beschränkter Beweglichkeit erlauben, die Toilette selbstständig zu benutzen, und sich insbesondere ohne fremde Hilfe zu setzten und wieder aufzustehen.

Diese und andere Aufgaben werden erfüllt durch eine Toilettenvorrichtung gemäss dem unabhängigen Patentanspruch. Weitere bevorzugte Ausführungsformen sind in den abhängigen Ansprüchen gegeben.

### Darstellung der Erfindung

Eine erfindungsgemässe Toilettenvorrichtung weist einen Sitz mit einer Öffnung auf, unter dem ein zur Aufnahme von menschlichen Ausscheidungsprodukten, also Fäkalien, Urin und Erbrochenem, vorgesehener einseitig verschlossener und gegen die Öffnung des Sitzes hin offener Folienschlauch angebracht ist. Weiter sind Mittel vorhanden zum Verschliessen des Folienschlauchs zu einem geschlossenen Beutel und zum Abtrennen des geschlossenen Beutels, so dass wiederum ein einseitig verschlossener Folienschlauch entsteht. Eine Auffangvorrichtung dient der Aufnahme abgetrennter geschlossener Beutel. Der Sitz kann mittels einer Vorrichtung zum Halten und Bewegen des Sitzes von einer ersten Entleerungsposition, in welcher er sich über der Auffangvorrichtung befindet, in mindestens eine weitere Benutzungsposition gebracht werden, in welcher er sich neben der Auffangvorrichtung befindet. In einer vorteilhaften Ausführungsform einer solchen Toilettenvorrichtung kann der Sitz in eine zweite Position gebracht werden, in welcher er von einem Benutzer in sitzender Position als Toilette benutzt werden kann. Alternativ oder zusätzlich kann der Sitz in eine dritte Position gebracht werden, in welcher er von einem männlichen oder weiblichen Benutzer in stehender Position als Urinal benutzt werden kann. In einer besonders vorteilhaften Variante ist der Sitz in der Höhe beliebig verstellbar.

In einer vorteilhaften Ausführungsform einer erfindungsgemässen Toilettenvorrichtung ist vorgesehen, dass mit der Vorrichtung zum Halten und Bewegen des Sitzes der Sitz gegenüber der Auffangvorrichtung waagrecht und/oder senkrecht verschiebbar ist, und/oder aus der Horizontalen schwenkbar ist. Damit kann der Sitz bei Nichtgebrauch weggeräumt oder versteckt werden, um freien Platz im Toilettenraum zu gewinnen.

Die erfindungsgemässe Toilettenvorrichtung weist vorteilhafterweise eine Verschliessvorrichtung auf, welche geeignet ist, einen Abschnitt des Folienschlauchs mit einem mechanischen Verschluss zu einem geschlossenen Beutel zu verschliessen, beispielsweise einem Clipverschluss, einem Drahtverschluss oder einem Klebbandverschluss. Alternativ oder zusätzlich kann eine Verschliessvorrichtung den Beutel auch thermisch, also durch Hitze, verschliessen. Die Verschliessvorrichtung ist vorzugsweise geeignet, den Folienschlauch zu einem neuen einseitig offenen Beutel zu verschliessen. Ebenfalls können Mittel zum Verschliessen der Auffangvorrichtung vorgesehen sein. Beispielsweise können Verschliessvorrichtungen zum Verschliessen eines als Auffangbehälter dienenden Sackes vorgesehen sein.

In einer besonders vorteilhaften Variante der erfindungsgemässen Toilettenvorrichtung wird der als Auffangvorrichtung dienende Sack gleich wie die Beutel ebenfalls aus dem Folienschlauch gebildet. Zu diesem Zweck wird bei Bedarf, beispielsweise beim Einsetzen einer neuen Kassette mit Folien-schlauchvorrat, ein erster, besonders langer Beutel gebildet. Dieser wird anschliessend nicht verschlossen, sondern mit geeigneten Mitteln, beispielsweise einem entsprechend ausgestalteten Sackhalter, offen gehalten.

In einer anderen Variante einer erfindungsgemässen Toilettenvorrichtung ist eine Vorrichtung zur Zudosierung einer festen oder flüssigen Substanz in den offenen Beutel und/oder den Auffangbehälter vorgesehen. Eine solche Substanz kann beispielsweise ein geruchbindender Stoff oder ein wasserbindener Stoff sein. Die Zudosierung kann in den offenen Beutel vor oder nach der Benutzung erfolgen.

Es kann weiter eine Abtrennvorrichtung vorgesehen sein, um einen geschlossenen Beutel vom Folienschlauch abzutrennen.

In einer anderen vorteilhaften Variante weist eine erfindungsgemässe Toilettenvorrichtung eine Greif-/Klemmvorrichtung auf, mit welcher das geschlossene Ende des Folienschlauchs gegriffen und gezogen werden kann.

In einer weiteren Ausführungsform ist eine Vorrichtung zur Komprimierung eines Beutels vorgesehen. Beispielsweise kann eine Vorrichtung zum Vakuumieren des Beutels verwendet werden, um diesen zu kompaktieren. Die Auffangvorrichtung der erfindungsgemässen Toilettenvorrichtung erhält so eine grössere effektive Kapazität.

Die erfindungsgemässe Toilettenvorrichtung kann sowohl als fest montierte als auch als fahrbare Einheit ausgestaltet sein. Die Auffangvorrichtung kann reversibel von der Toilettenvorrichtung trennbar ausgestaltet sein. Sie kann insbesondere auch fahrbar ausgestaltet sein, beispielsweise mit Rollen, so dass sie unabhängig von der restlichen Toilettenvorrichtung transportiert werden kann.

Eine erfindungsgemässe Toilettenvorrichtung kann teilweise oder vollständig elektrisch betrieben werden, oder auch rein mechanisch betätigt werden.

Eine erfindungsgemässe Toilettenvorrichtung benötigt für ihren Betrieb kein Spülwasser, was sie besonders geeignet macht für gewichtssensitive Anwendungen, zum Beispiel in Langstreckenflugzeugen, und für Verwendungen an Orten, wo kein Fliesswasser zur Verfügung steht (z.B. in Wüstensiedlungen oder an anderen Orten mit keiner oder nur sehr beschränkter Verfügbarkeit von Wasser).

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch eine Schnittansicht durch eine Ausführungsform einer erfindungsgemässen Toilettenvorrichtung, mit vier Schritten (a), (b), (c), (d), welche die Funktionsweise aufzeigen.
- Figur 2: zeigt schematisch eine Schnittansicht durch eine weitere Ausführungsform einer erfindungsgemässen Toilettenvorrichtung, (a) in einer Benutzungsposition und (b) in einer Entleerungsposition.
- Figur 3: zeigt eine weitere Ausführungsform einer erfindungsgemässen Toilettenvorrichtung, (a) in einer Seitenansicht und (b) in einer perspektivischen Ansicht ohne Gehäuse und Rahmenstruktur, und (c) in einer perspektivischen Ansicht mit einem Gehäuse. Figur 3(d) zeigt die Verschliessvorrichtung der Toilettenvorrichtung.
- Figur 4: zeigt schematisch noch eine weitere Ausführungsform einer erfindungsgemässen Toilettenvorrichtung, (a) in einer Seitenansicht und (b) in einer Frontalansicht in einer ersten Position, (c) in einer Seitenansicht der Toilettenvorrichtung in einer zweiten Position, und (d) in einer Frontansicht in der zweiten Position.
- Figur 5: offenbart eine weitere vorteilhafte Ausführungsform einer erfindungsgemässen Toilettenvorrichtung, (a) in einer ersten Position, (b) in einer zweiten Position, und (c) in einer dritten Position.
- Figur 6: zeigt noch eine Ausführungsform einer erfindungsgemässen Toilettenvorrichtung, (a), (b) in einer ersten Position, (c), (d), während des Übergangs von der ersten Position in eine zweite Position, (e), (f) in einer zweiten Position, und (g), (h) in einer dritten Position.
- Figur 7: zeigt einen Querschnitt durch Teile der erfindungsgemässen Toilettenvorrichtung aus Figur 6, in ihrer räumlichen Anordnung.
- Figur 8: zeigt eine vorteilhafte Ausführungsform der Verschliessvorrichtung, in welcher die Verschliessvorrichtung dazu dient, den Folienschlauch nach unten zu ziehen.
- Figur 9: zeigt eine vorteilhafte Ausführungsform der Verschliessvorrichtung, in welcher der Beutel kompaktiert werden kann.
- Figur 10: zeigt eine vorteilhafte Ausführungsform des Sitzes, in welcher eine Haltevorrichtung den Beutel straff hält.
- Figur 11: zeigt schematisch eine andere vorteilhafte Toilettenvorrichtung, in verschiedenen Phasen des Betriebs.

### Ausführung der Erfindung

Die im Folgenden beschriebenen Beispiele werden zur besseren Veranschaulichung der vorliegenden Erfindung gegeben, sind jedoch nicht dazu geeignet, die Erfindung auf die hierin offenbarten Merkmale zu beschränken.

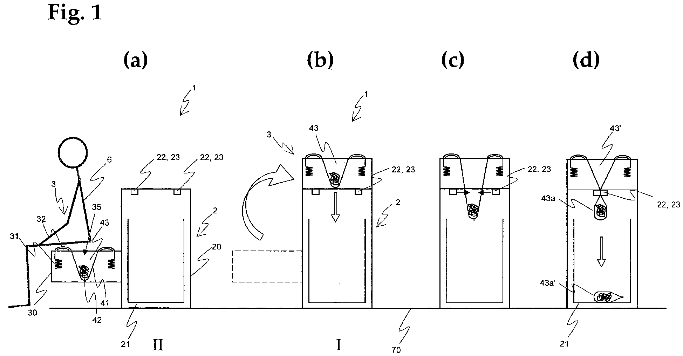

Eine mögliche Ausführungsform einer erfindungsgemässen Toilettenvorrichtung 1 ist in Figur 1 dargestellt. Figur 1(a) zeigt eine solche Toilettenvorrichtung 1 in einer Benutzungsstellung II. Ein Sitz 3 ist neben einer tragenden Rahmenstruktur 2 der Toilettenvorrichtung 1 angeordnet, und wird von einer an der Rahmenstruktur 2 angebrachten Vorrichtung (nicht dargestellt) zum Halten und Bewegen des Sitzes getragen. Die Rahmenstruktur 2 dient als Traggerüst der Vorrichtung zum Halten und Bewegen des Sitzes. Im dargstellten Beispiel umfasst die Rahmenstruktur weiter ein Gehäuse 20 und eine Auffangvorrichtung 21, im gezeigten Beispiel ein tonnenförmiger Auffangbehälter.

Der Sitz umfasst ein Sitzelement 32 mit einer Öffnung 35, vorzugsweise in der Form eines Ringes, eines Ovals oder einer anderen geeigneten abgerundeten Form ohne Ecken. Das Sitzelement 32 ist gegenüber der Verschalung 30 des Sitzes angehoben. Ein Folienschlauch 41 wird von aussen über das Sitzelement 32 geführt, so dass das Sitzelement immer hygienisch abgedeckt ist. Auf der Innenseite des Sitzelements wird der Folienschlauch wieder nach unten geführt. Der Folienschlauch 41 ist an diesem Ende geschlossen (44, 45), so dass sich unterhalb des Sitzelements 32 ein trichterförmiger, gegen oben offener Beutel 43 bildet, der direkt als Auffangtrichter dienen kann.

Unterhalb des Sitzelements 32 ist ein Schlauchvorrat 31 angebracht, aus welchem der Folienschlauch 41 gespeist wird. Der Schlauchvorrat 31 kann beispielsweise aus einem ziehharmonika-ähnlichen, kreisrunden Vorratsstapel bestehen. Der Folienschlauch 41 sollte die notwendige mechanische Belastbarkeit aufweisen, und bevorzugt blickdicht sein. Der Schlauchvorrat 31 kann beispielsweise in einer Nachfüllkassette gelagert sein, die bei Bedarf als Verbrauchsmaterial einfach ausgewechselt wird.

Unterhalb des Sitzelements 32 kann zusätzlich ein Trichter oder eine Schüssel vorgesehen sein, auf denen der Folienschlauch 41 aufliegt. Diese Schüssel kann der Formgebung des Beutels 43 dienen, sowie als zusätzliches Auffangelement bei einer Fehlfunktion.

Der Folienschlauch 41 kann sowohl oberhalb des Sitzelements 32 durchgeführt werden - wie im gezeigten Beispiel - als auch unterhalb. Wenn die Folie über den Toilettenring 32 verläuft, entfällt dessen Reinigung, da ja die Folie 41 nach jeder Benutzung ersetzt wird. Diese Variante ist deshalb besonders für Toilettenanlagen im öffentlichen Raum geeignet. Ist eine regelmässige Grobreinigung der erfindungsgemässen Toilettenvorrichtung sichergestellt, wie beispielsweise in einem Flugzeug oder bei einer fahrbaren Toilettenvorrichtung im Pflegebereich, bietet ein Sitzelement oberhalb des Folienschlauchs gegebenenfalls einen höheren Sitzkomfort.

Während der Benutzung der erfindungsgemässen Toilettenvorrichtung 1 sitzt ein Benutzer auf dem Sitzelement 32. Anfallende menschliche Ausscheidungsprodukte 42 und verbrauchtes Toilettenpapier verbleiben im offenen Beutel 43. Nach der Benutzung löst der Benutzer oder ein geeigneter automatischer Mechanismus den Entleerungsvorgang der erfindungsgemässen Toilettenvorrichtung aus. Eine geeignete Vorrichtung hebt den Sitz 3 aus der Benutzungsposition II in die Entleerungsposition I, wie in Figur 1 (b) gezeigt. Der Sitz 3 befindet sich nun oberhalb der Auffangvorrichtung 21. Mit geeigneten Mitteln, wie zum Beispiel einer Greifvorrichtung, wird nun der gefüllte offene Beutel 43 nach unten gezogen, wobei gleichzeitig frischer Folienschlauch 41 aus dem Schlauchvorrat 31 nachgezogen wird.

Mit einer Verschliessvorrichtung 22 wird nun der offene Beutel 43 dicht verschlossen (vgl. Figur 1(c)). Der Beutel kann zum Beispiel thermisch verschlossen werden, beispielsweise durch Verschweissen mit einem aufgeheizten Draht oder Heissluft. Ebenfalls möglich ist das Anbringen eines mechanischen Verschlusses, insbesondere eines Clipverschlusses, eines Drahtverschlusses, wie er beispielsweise bei Wurstketten angewendet wird, oder einem Klebebandverschluss, wie er bei Lebensmittelverpackungen verwendet wird, wobei in diesem Fall die zusammengeraffte Schlauchfolie mit einem Klebeband umschlungen wird. In einer vorteilhaften Variante einer erfindungsgemässen Toilettenvorrichtung weist die Verschliessvorrichtung Mittel zum Zusammenraffen eines Abschnitts der Schlauchfolie und/oder zum Verdrehen des zusammengerafften Folienschlauchs auf. Eine Verschliessvorrichtung 22 muss kräftig genug sein, um nötigenfalls auch in der Schliesszone verbleibendes Toilettenpapier zusammenraffen zu können, so dass dennoch eine dichte Versiegelung möglich wird.

Vorteilhafterweise wird bei mechanischen Verschlüssen, unabhängig von der Verschlussmethode, vor dem Verschliessen der Folienschlauch verdreht, um eine möglichst grosse Dichtigkeit zu erreichen. Dies kann beispielsweise durch spezielle Mittel geschehen, die die Schlauchfolie greifen und lokal verdrehen können. Ebenfalls möglich ist jedoch auch das Verdrehen des gesamten gegen die Öffnung hin liegenden Schlauchvorrats, bspw. durch Drehen der Nachfüllkassette oder des gesamten Sitzes.

In Figur 1(d) ist dargestellt, wie nach dem Verschliessen der nun geschlossene Beutel 43a mit einer Abtrennvorrichtung 23 vom Folienschlauch abgetrennt wird, sodass er aufgrund der Schwerkraft in die Auffangvorrichtung 21 fällt. Der Verschluss des Folienschlauchs wird dabei vorzugsweise so ausgeführt, dass beim Abtrennen des Beutels 43a der Folienschlauch 41 an seinem neuen unteren Ende wiederum geschlossen ist. Dies kann beispielsweise erreicht werden, indem eine thermische Versiegelungszone breit ausgeführt wird, und die Abtrennung in deren Mitte erfolgt.

Nach dem Abtrennen des Beutels 43a und der Bildung des neuen offenen Beutels 43' ist die erfindungsgemässe Toilettenvorrichtung bereit für eine nächste Benutzung. Sie kann zu diesem Zweck wieder in die Benutzungsposition II gebracht werden (Figur 1(a)). Alternativ kann sie auch in der Position I verbleiben, und erst bei Bedarf in die Position II gebracht werden.

Vor dem Verschliessen und Abtrennen des Beutels kann auf geeignete Weise ein geruchbindender Stoff in den Beutel gegeben werden. Auf diese Weise können Geruchsemissionen aus den verschlossenen Beuteln vermieden werden. Ebenfalls möglich und vorteilhaft ist die Zugabe eines Stoffes, welcher Wasser binden kann.

Die Auffangvorrichtung 21 einer erfindungsgemässen Toilettenvorrichtung 1 für die entstehenden Beutel 43a kann hinter oder neben dem Toilettensitz angeordnet sein. Dies erlaubt eine kompakte Bauweise der Toilettenvorrichtung, sowie eine hohe Kapazität der Auffangvorrichtung. Möglich wird so insbesondere auch eine mobile Ausführung der Toilettenvorrichtung, was zum Beispiel in Spitälern und Pflegeheimen wünschenswert ist, um die bisher verwendeten üblichen Toilettenstühle mit Pfanne zu ersetzen.

Vorzugsweise ist die Auffangvorrichtung 21 von der Toilettenvorrichtung 1 abtrennbar, um beispielsweise den Inhalt leichter entsorgen zu können. In der Auffangvorrichtung 21 ist vorzugsweise ein Sack 221 angeordnet, der die Beutel aufnimmt 43a, 43a. Dies ermöglicht eine effiziente Wartung der Toilettenvorrichtung. Im Sack 221 kann ein geruchbindender Stoff und/oder ein wasserbindender Stoff vorhanden sein. Nach Erreichen des maximalen Füllgrades wird der Sack 221 verschlossen, von Hand oder mit einer ähnlichen Vorrichtung, wie sie für die die Beutel 43 verwendet wird. Der Sack wird aus der Auffangvorrichtung entfernt und anschliessend entsorgt. Beispielsweise kann der gefüllte Sack in einer Abfall-Verbrennungsanlage verbrannt werden.

Der Sack kann auch in ein Gestell eingehängt werden, so dass Gestell und Sack zusammen die Auffangvorrichtung 21 bilden. Eine vorteilhafte Variante ist, die Auffangvorrichtung fahrbar zu gestalten, beispielsweise auf Rädern oder Rollen. So kann dieser nötigenfalls unabhängig von der restlichen Toilettenvorrichtung transportiert werden, zum Beispiel bei fest montierten erfindungsgemässen Toilettenvorrichtungen.

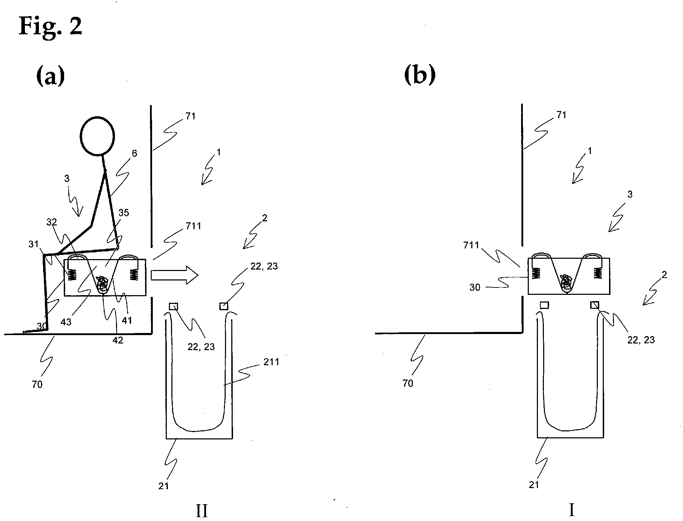

Eine weitere vorteilhafte Ausführungsform einer erfindungsgemässen Toilettenvorrichtung 1 ist in Figur 2 in einer Benutzungsposition II und in einer Entleerungsposition I dargestellt. In Figur 2(a) sitzt ein Benutzer 6 auf dem Sitzelement 32, über das der Folienschlauch 41 verläuft. In der Mitte des Sitzelementes 32 unter der Öffnung 35 befindet sich der Trichter des offenen Beutels 43. In der dargestellten Ausführungsform der Toilettenvorrichtung 1 ist die Rahmenstruktur 2 im Wesentlichen hinter einer Wand 71 angeordnet. Eine Auffangvorrichtung 21 mit Sack 221 befindet sich hinter der Wand 71, und ist im Vergleich zu Figur 1 gegenüber dem Fussboden 70 abgesenkt.

Nach der Benutzung verschiebt eine entsprechende Vorrichtung der erfindungsgemässen Toilettenvorrichtung 1 den Sitz 3 durch eine Öffnung 711 in der Wand 71 nach hinten über die Auffangvorrichtung 21. Das Verschliessen und Abtrennen des Beutels 43 und die Vorbereitung des Sitzes für die nächste Benutzung erfolgen analog zu der Variante der Toilettenvorrichtung 1 aus Figur 1.

Die in Figur 2 offenbarte Variante einer erfindungsgemässen Toilettenvorrichtung 1 ist besonders geeignet für fixe Installationen, beispielsweise in Gebäuden oder in grösseren Fahrzeugen wie Wohnmobilen und Bussen, oder auch in Flugzeugen. Sie erlaubt eine besonders Platz sparende Installation, da nur ein Minimum an Raum für das Toilettensystem benötigt wird. Es kann vorgesehen sein, dass der Sitz 3 in Normafall hinter der Wand verbleibt.

Die Grösse der Auffangvorrichtung 21 kann beliebig gewählt werden. Die Auffangvorrichtung 21 kann auch weiter unten oder seitlich versetzt angeordnet werden, wobei eine geeignete Rutsche den geschlossenen und abgetrennten Beutel 43a zur Auffangvorrichtung leitet. Es können auch Fördermittel vorgesehen sein, um den Beutel 43a zu einer weiter entfernten Auffangvorrichtung zu bringen, beispielsweise ein Förderband oder ein druckluftbetriebenes System ähnlich einer Rohrpost.

In einer besonders vorteilhaften fest montierten Ausführungsform einer erfindungsgemässen Toilettenvorrichtung verwenden mehrere Toilettenvorrichtungen eine gemeinsame Auffangvorrichtung. Beispielsweise können mehrere erfindungsgemässe Toilettenvorrichtungen in einem Gebäude eine gemeinsame Auffangvorrichtung im Keller benutzen, oder mehrere Toilettenvorrichtungen in einem Flugzeug eine gemeinsame Auffangvorrichtung zum Beispiel am Ende des Flugzeugs oder im Gepäckraum unterhalb der Passagierebene. Nach der Landung kann das Wartungspersonal die Auffangvorrichtung ohne komplizierte technische Gerätschaften sehr schnell entleeren.

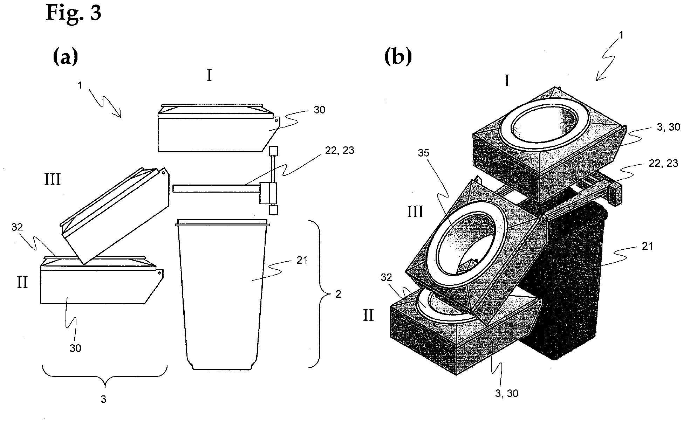

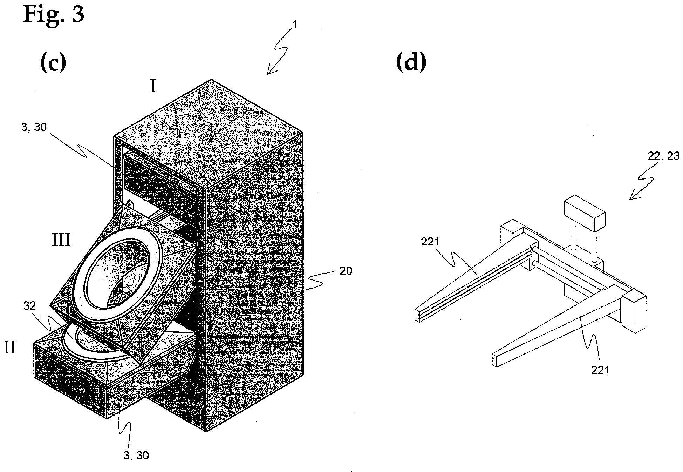

Eine weitere Ausführungsform einer erfindungsgemässen Toilettenvorrichtung 1 ist in Figur 3 offenbart. Figur 3(a) und (b) zeigt die räumliche Anordnung des Sitzes 3, der Auffangvorrichtung 21 in Form einer Tonne und der Verschliessvorrichtung 22 der Toilettenvorrichtung 1. Die restlichen Elemente sind der Übersichtlichkeit halber nicht dargestellt. Der Sitz 3 ist in drei verschiedenen Positionen I, II, III dargestellt. Figur 3(c) zeigt die Toilettenvorrichtung mit Gehäuse 20.

In einer ersten Position I oberhalb der Auffangvorrichtung 21 kann der Beutel (nicht dargestellt) mit der Verschlussvorrichtung 22 verschlossen und anschliessend abgetrennt werden. In einer zweiten Position II kann die Toilettenvorrichtung von einem Benutzer in sitzender Position als Toilette benutzt werden. In einer dritten Position III hingegen ist der Sitz höher angeordnet und die Ebene des Sitzes 3 abgekippt. Auf diese Art kann die erfindungsgemässe Toilettenvorrichtung 1 als wasserfreies Urinal für Männer, aber auch für Frauen, verwendet werden, ohne dass weitere Anpassungen notwendig sind.

Eine Verschliessvorrichtung 22 der erfindungsgemässen Toilettenvorrichtung ist in Figur 3(d) gezeigt. Die Verschliessvorrichtung ist als thermische Verschliessvorrichtung ausgestaltet, mit zwei Armen 221. Zum Verschliessen eines Beutels werden die Arme von ihrer Grundposition in die Mitte gefahren, wo sie den Folienschlauch zusammenpressen und die Folie thermisch versiegeln.

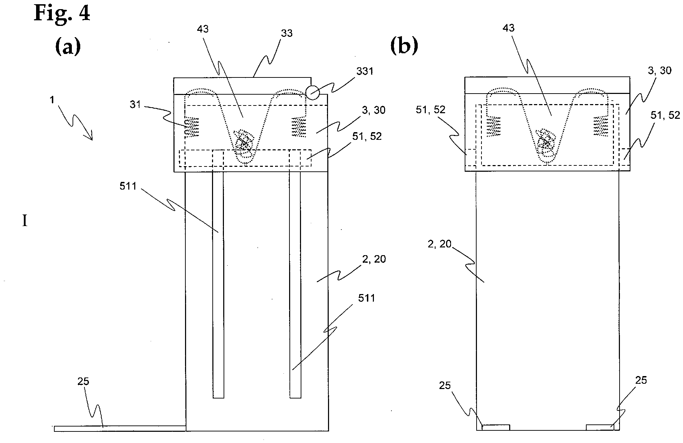

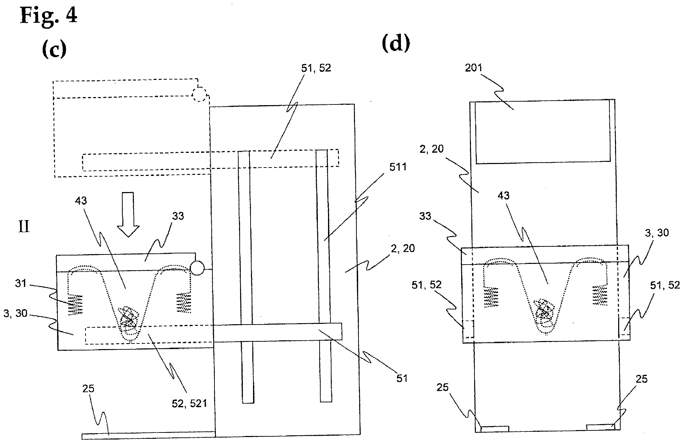

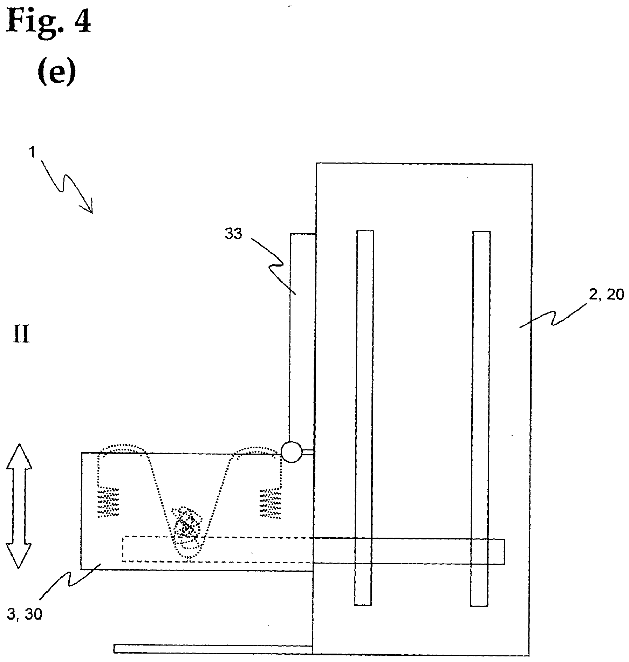

Figur 4 zeigt schematisch noch eine weitere Ausführungsform einer erfindungsgemässen Toilettenvorrichtung 1. Der Sitz 3 wird gegenüber der Rahmenstruktur 2 durch eine Hubvorrichtung 51 und eine an diese gekoppelte Schiebevorrichtung 52 gehalten. Die Rahmenstruktur 2 ist in einem Gehäuse 20 angeordnet, und der Sitz weist eine Verschalung 30 und einen hochklappbaren Deckel 33 auf. Von der ersten Position I, dargestellt in Figur 4(a) und (b), kann der Sitz nun in die zweite Position II gefahren werden (Figur 4(d)). Dazu schiebt die Schiebevorrichtung 52 den Sitz 3 zuerst auf zwei Auslegern 521 nach vorne, wobei eine Öffnung 201 in der oberen Front des Gehäuses 20 den Beutel 43 passieren lässt. Anschliessend senkt die Hubvorrichtung 51 den Sitz auf die gewünschte Höhe ab. Dies erlaubt es, die Sitzhöhe flexibel an die Bedürfnisse der benutzenden Person anzupassen, insbesondere die Körpergrösse oder individuelle körperliche Beweglichkeit. Zum Beispiel muss die Sitzposition je nach Körpergrösse oder Bewegungsfähigkeit höher oder tiefer fixierbar sein.

Ist der Sitz 3 in der gewünschten Position, kann die benutzende Person 6 den Deckel 33 hochklappen und absitzen, wie in Figur 4(c) dargestellt. Gegebenenfalls kann der Sitz auch mit der benutzende Person nach oben oder unten gefahren werden, um zum Beispiel das Absitzen oder Aufstehen zu erleichtern. Eine solche Toilettenvorrichtung ermöglicht es einem Menschen mit beschränkter Beweglichkeit, die Toilette selbstständig zu benutzen. Insbesondere kann sich eine benutzende Person ohne fremde Hilfe setzten und sich anschliessend durch die Hebbewegung wieder ohne physische Unterstützung durch Dritte auf die Beine helfen lassen.

Bei der Toilettenvorrichtung 1 in Figur 4 ist die Verschalung 30 des Sitzes 3 derart ausgestaltet, dass sich diese in der Position I über das Gehäuse 20 schiebt. Auf diese Art liegen alle verschmutzbaren Flächen aussen, und können problemlos gereinigt werden.

Auf der Seite des Sitzes sind Stützen 25 vorgesehen, die ein Abkippen der Toilettenvorrichtung auch bei schwergewichtigen Personen verhindern. Die Stützen können bei fahrbaren Toilettenvorrichtungen zum Beispiel im Stillstand ausgezogen werden. Es ist auch möglich, die Stützen maschinell ein- und ausfahrbar zu gestalten.

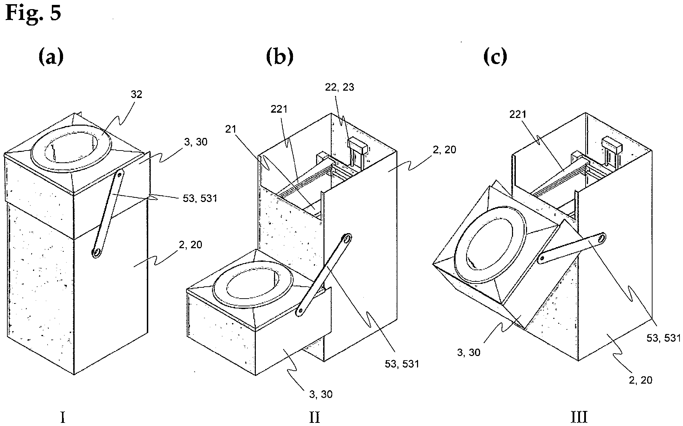

Figur 5 offenbart eine weitere vorteilhafte Ausführungsform einer erfindungsgemässen Toilettenvorrichtung 1, bei welcher eine Schwenkvorrichtung 53 vorgesehen ist, um den Sitz 3 von der ersten Position I (Figur 5(a)) in die zweite Sitzposition II (Figur 5(b)) zu schwenken. Schwenkarme 531 halten den Sitz 3 gegenüber der Rahmenstruktur 2 innerhalb des Gehäuses 20. Die Schwenkarme sind jeweils auf Achsbolzen gelagert, wobei in der Rahmenstruktur 2 und im Sitz Mittel vorgesehen sind, um den jeweiligen Rotationswinkel des Schwenkarms einzustellen. Auch diese Ausführungsform einer erfindungsgemässen Toilettenvorrichtung lässt sich einfach in eine dritte Position III fahren, in der sie als Urinal nutzbar ist, wie in Figur 5(c) dargestellt.

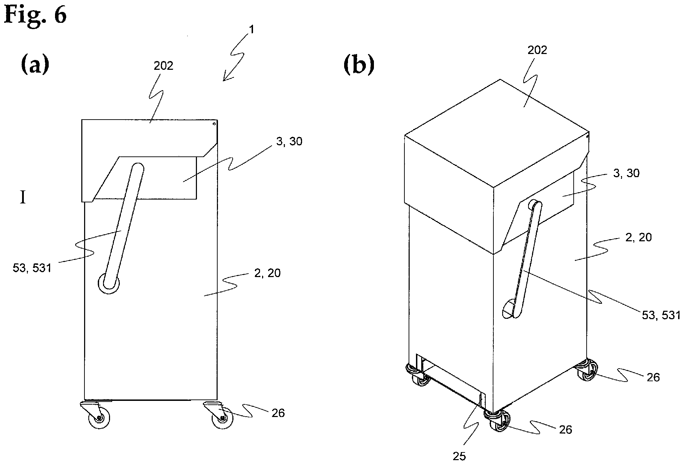

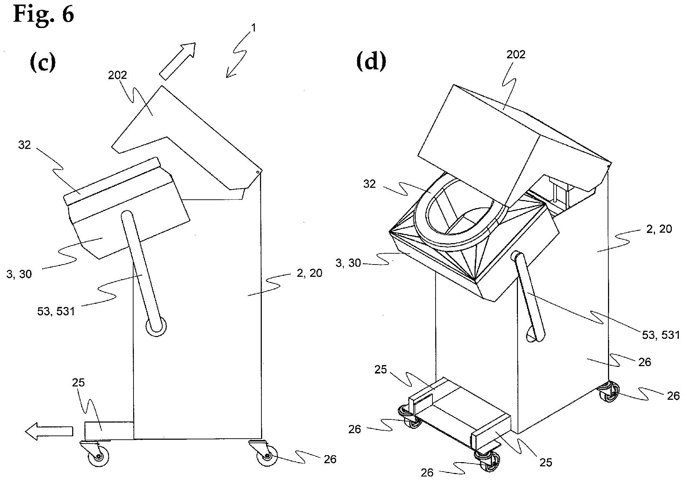

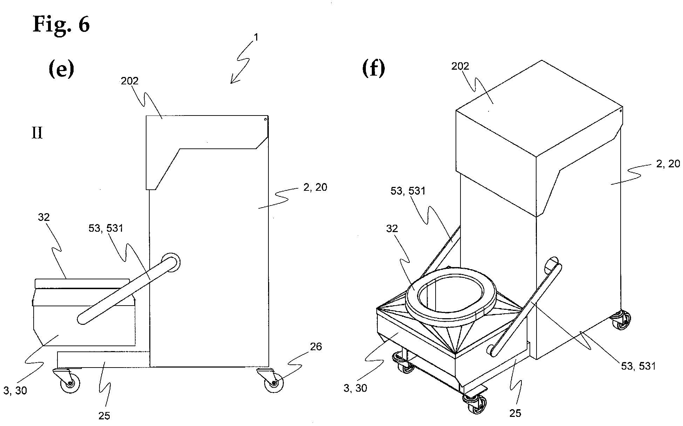

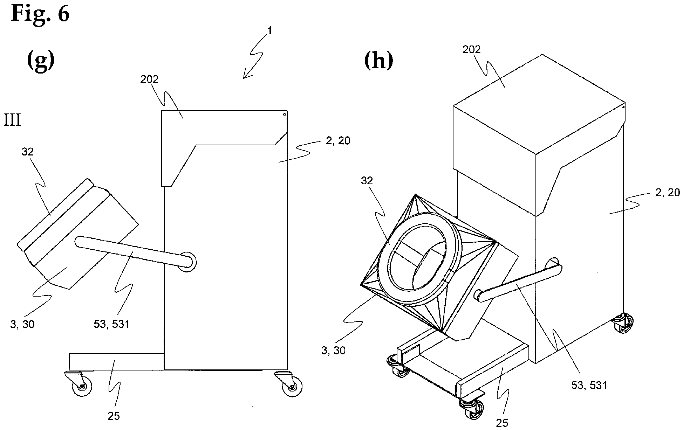

Noch eine Ausführungsform einer erfindungsgemässen Toilettenvorrichtung 1 ist in Figur 6 dargestellt. Figuren 6(a) und (b) zeigen die erfindungsgemässe Toilettenvorrichtung 1 in einer ersten Position I in Seitenansicht und in perspektivischer Ansicht. Die Toilettenvorrichtung 1 umfasst eine Rahmenstruktur 2 mit einem Gehäuse 20, welches auf vier Schwenkrollen 26 gelagert ist. Die dargestellte Ausführungsvariante lässt sich also leicht rollend verschieben. Arretiervorrichtungen (nicht dargestellt) erlauben die reversible Arretierung mindestens einer Rolle 26.

Der Sitz 3 ist auf Schwenkarmen 531 schwenkbar gelagert, und befindet sich oberhalb der Auffangvorrichtung und des Gehäuses 20. Eine mit dem Gehäuse 20 schwenkbar verbundene Abdeckung 202 schliesst den Sitz 3 und das Gehäuse 20 nach oben ab. In der gezeigten Position I kann die Vorrichtung beispielsweise verschoben oder gelagert werden.

Ist die erfindungsgemässe Toilettenvorrichtung 1 an den Ort des Gebrauchs gerollt worden, so wird die Toilettenvorrichtung in die Betriebsposition II gebracht, wie in Figur 6(c) und (d) dargestellt, während des Übergangs von der ersten Position I in die zweite Position II. Auf der Vorderseite werden zwei Stützen 25 ausgefahren oder ausgezogen, an deren vorderem Ende zwei der vier Rollen 26 angebracht sind. Auf diese Weise kann die Abstützung der Toilettenvorrichtung ohne Anheben vergrössert werden. Die Abdeckung 202 wird nach oben geschwenkt, wodurch der Sitz 3 freigegeben wird. Die Schlauchfolie und der Beutel sind in Figur 6 nicht dargestellt. Die Schwenkvorrichtung 53 schwenkt nun den Sitz 3 nach vorne. Diese Schritte können nacheinander oder gleichzeitig vorgenommen werden. Einzelne oder alle Schritte können maschinell vorgenommen werden, mittels geeigneter Aktuatoren.

Figuren 6(e) und (f) zeigen nun die erfindungsgemässe Toilettenvorrichtung 1 in der betriebsbereiten Position II. In dieser ist die Abdeckung 202 wieder geschlossen, was aber nicht unbedingt notwendig ist. Die Stützen 25 sind voll ausgefahren, und die Rollen 26 vorzugsweise arretiert. Der Sitz 3 befindet sich in einer Position direkt oberhalb der Stützen 26, wo er von einem Benutzer in sitzender Haltung benutzt werden kann. Die Stützen 25 sind wie im gezeigten Beispiel vorzugsweise so angeordnet, dass der Benutzer seine Fersen leicht unterhalb des Sitzes positionieren kann, was einer anatomisch bequemen und natürlichen Haltung entspricht.

Alternativ kann die Toilettenvorrichtung 1 auch in eine dritte Position III gebracht werden kann, wie in den Figuren 6(g) und (h) gezeigt. In dieser ist der Sitz erhöht angeordnet, und zur Horizontalen ausgeschwenkt, so dass er als Urinal verwendet werden kann.

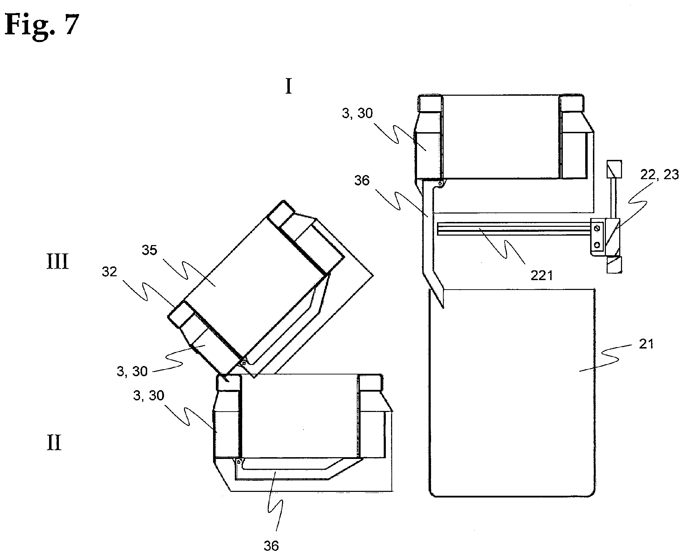

Figur 7 zeigt einen Querschnitt durch den Sitz 3, Verschliess- und Abtrennvorrichtung 22, 23 und die Auffangvorrichtung 21 der erfindungsgemässen Toilettenvorrichtung 1 aus Figur 6, in der ersten, zweiten, und dritten Position I, II, III. Die anderen Elemente sind nicht dargestellt. Dabei ist erkennbar, dass unterhalb der Öffnung 35 des Sitzes eine Auffangklappe 36 schwenkbar angeordnet ist. In der Position II und III ist diese Klappe 36 geschlossen. Sie dient dabei nicht dem Auffangen der Fäkalien, denn diese werden ja durch den (nicht dargestellten) Beutel des Folienschlauchs aufgefangen. Kommt es jedoch zu einer Fehlfunktion, beispielsweise weil die Toilettenvorrichtung trotz zu Ende gegangenem Schlauchvorrat und fehlendem Beutel benutzt wird, so dient die Auffangklappe als redundanter Auffangbehälter, und minimiert so den Reinigungsaufwand nach dieser Fehlbenutzung.

In der Position I wird die Auffangklappe 36 nach unten geklappt, so dass der innerhalb des Sitzes angeordnete Beutel für die nachfolgenden Schritte des Verschliessens und Abtrennen des Beutels zugänglich ist. Nach der Bildung des neuen Beutels kann dann die Auffangklappe wieder geschlossen werden.

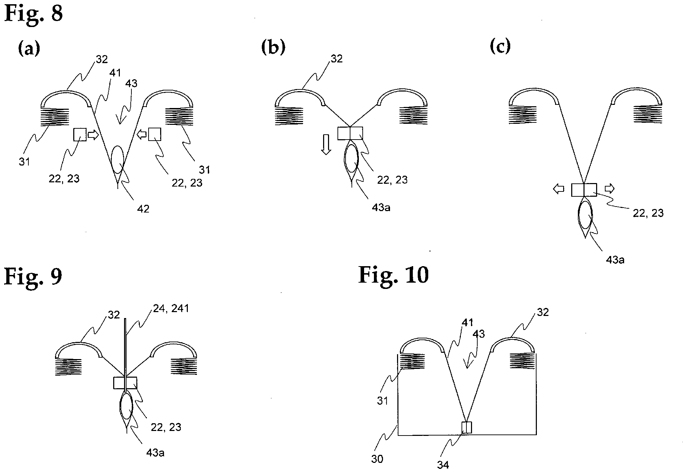

Eine vorteilhafte Ausführungsform einer Verschliessvorrichtung zur Verwendung in einer erfindungsgemässen Toilettenvorrichtung ist in Figur 8 gezeigt. Der Sitz 3 befindet sich in der Entleerungsposition. Eine Verschliessvorrichtung 22 befindet sich in Grundposition, mit ihren zwei Armen 221 auf beiden Seiten des Beutels 43 (Figur 8(a)). Die Arme 221 werden geschlossen, wobei sie den Folienschlauch 41 einklemmen (Figur 8(b)). Schliesslich bewegen sich die Arme 221 der Verschliessvorrichtung 22 nach unten in eine zweite Position, während sie den Folienschlauch weiterhin klemmend halten (Figur 8(c)). Dabei nimmt die Verschliessvorrichtung 22 den Folienschlauch 41 mit, so dass neuer Folienschlauch 41 aus dem Schlauchvorrat 31 nachgefördert wird. Die thermische Versiegelung der Folie erfolgt dabei vor, während oder nach der Verschiebung der Arme 221.

Figur 9 offenbart eine Ausführungsform einer erfindungsgemässen Toilettenvorrichtung mit einer Vorrichtung 24 zur Komprimierung des zu verschliessenden Beutels 43. Zu diesem Zweck wird im gezeigten Beispiel von oben ein Rohr 241 eines Saugsystems in den Beutel 43 eingebracht, so dass vor oder während des Versiegelungsvorgangs Luft aus dem Beutel abgesaugt werden kann. Der fertig verschlossene Beutel 43a weist dann ein wesentlich geringeres Volumen auf, was die Aufnahmekapazität der Auffangvorrichtung erhöht.

Eine weitere vorteilhafte Ausführungsform eines Sitzes einer erfindungsgemässen Toilettenvorrichtung 1 ist in Figur 10 dargestellt. Eine Haltevorrichtung 34 hält den offenen Beutel 43 straff. Wird nun der Sitz 3 in die Entleerungsposition gebracht, kann eine Klemmvorrichtung der Toilettenvorrichtung den Beutel 43 greifen, da dieser in einer definierten Position gehalten ist, und dann nach unten ziehen. Zusätzlich oder alternativ kann auch die Verschliessvorrichtung aus Figur 8 verwendet werden.

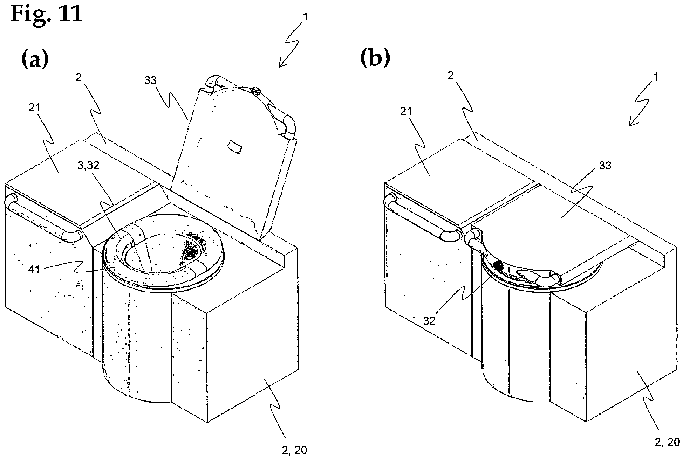

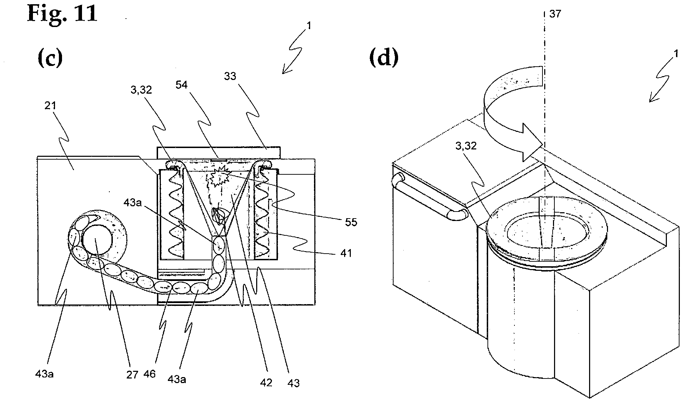

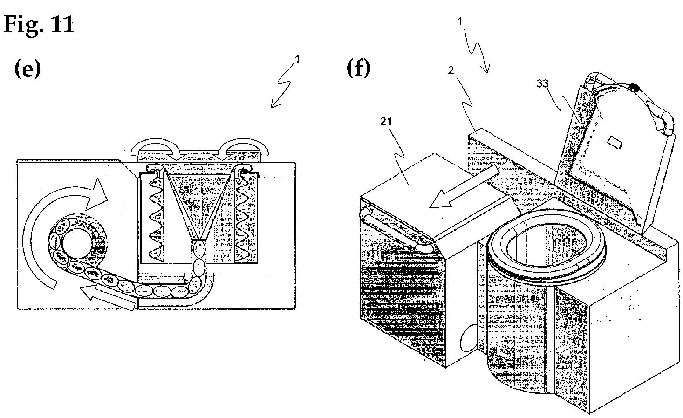

Eine andere vorteilhafte Toilettenvorrichtung 1 ist schematisch in Figur 11 dargestellt. Diese basiert darauf, dass die Toilettenschüssel nach Benützung, mitsamt dem über die Brille in die Schüssel gezogenen Endlosschlauch 41, gedreht wird. Durch das Verdrehen des Schlauchs 41 bilden sich mit verfestigten Ausscheidungen gefüllte Beutel 43a, die als Endloskette aufgerollt werden.

Figur 11(a) zeigt perspektivisch eine solche Toilettenvorrichtung 1 bereit zur Benutzung, mit einer Rahmenstruktur 2, einem Sitz 3 und einem Auffangbehälter 21. Der Sitz 3 mit der Toilettenschüssel kann mit dem herunter klappbaren Deckel 33 abgedeckt werden. Die Toilettenschüssel ist auf einem Drehgestell montiert. Im Sitz ist der Schlauchvorrat für den von aussen nach innen über das Sitzelement 32 geführten Folienschlauch 41 angeordnet, analog beispielsweise zu Figur 4. Der Folienschlauch bildet in der Schüssel einen Trichter. Der Folienschlauch kann auch unterhalb der Brille durchgezogen werden.

Nach der Benützung wird der Deckel 33 geschlossen, oder schliesst sich automatisch, wie in Figur 11(b) gezeigt. Um zu verhindern, dass später Flüssigkeit oder andere Ausscheidungen von einem Beutel zum andern gelangen, resp. zurückfliessen, wird aus einer Dosiervorrichtung 54 eine oder mehrere Portionen eines geeigneten pulver- oder granulatartigen Bindemittels 55 in den offenen Beutel 43 gegeben, welches Wasser bindet. Zusätzlich werden damit auch unangenehme Gerüche gebunden. Vorzugsweise ist die Dosiervorrichtung 54 wie im gezeigten Beispiel im Deckel 33 angeordnet. Das Bindemittel 55, beispielsweise Bentonit, verfestigt augenblicklich die Ausscheidungen und verklebt damit später auch die in sich verdrehten Teile des Beutels von innen her.

Nach dem Schliessen des Deckels wird der gefüllte Schlauchteil 43 durch die Schüssel hindurch nach unten gezogen, wobei frische Folie nachrückt. Dies geschieht, indem das Anfangsstück des Schlauches auf einer mechanisch angetriebenen Rolle 27 im Sammelbehälter 21 befestigt wird. Durch Drehung an der Rolle wird ein Zug auf die gefüllte Beutelkette und den Folienschlauch ausgeübt und werden die Beutel Stück für Stück auf die Rolle aufgespult. Nachdem der Folienschlauch ein Stück nach unten gezogen ist und die Schüssel mit frischer Folie ausgekleidet ist (wie in Figur 11 (c) im Querschnitt dargestellt) wird die Schüssel ein- oder mehrmals um eine vertikale Mittelachse 37 gedreht, so dass sich das obere Ende des befüllten Teils des Schlauches, der nun unterhalb der Schüssel in einer Zwischenposition liegt, in sich verdreht. So entsteht ein Beutel 43a, der durch das verdrehte Schlauchmaterial verschlossen ist. Die drehende Toilettenschüssel ist in Figur 11 (d) dargestellt, wobei der heruntergeklappte Deckel 33 nicht gezeigt ist. Die Drehbewegung und das Ziehen an der Beutelkette bewirken, dass überschüssige Luft im Beutel ausgestossen wird und die Beutelkette so eng wie möglich auf die Rolle aufgerollt werden kann.

Unterhalb der drehbaren Schüssel kann eine Haltevorrichtung vorgesehen sein, um den offenen Beutel bzw. die Beutelkette bei Verdrehen oder bis nach der nächsten Benutzung vorübergehend zu fixieren.

Der obere Teil des verdrehten Beutels bildet jeweils gleichzeitig den unteren Teil/Boden des nachfolgenden, zu füllenden Beutels, resp. Schlauchabschnittes. So entsteht eine Endloskette 46 von gefüllten und verdrehten Beuteln. Die Beutelkette 46 wird durch ein Rohr zur Rolle 27 geführt (Figur 11(e)). Bei jeder Benützung wird frische Folie aus der Reserve unter der Brille nachgezogen, so dass die Toilette immer sauber bleibt. Die Toilette ist bereit für die nächste Benützung.

Alle gefüllten Beutel werden im Sammelbehälter 21 aufgerollt. Dieser Behälter wird kann von der Toilettenvorrichtung abgekoppelt werden (Figur 11(f)). Der Inhalt, bzw. die gefüllte Rolle wird z.B. in einen Kehrichtsack gegeben, oder ein als Wegwerfbehälter konzipierter Sammelbehälter 21 wird als Ganzes entsorgt. Nicht verbrauchtes Folienmaterial kann vor der Entleerung auf die Rolle aufgebracht und so entsorgt werden.

Vor Inbetriebnahme wird die die Folienreserve 31 unterhalb der Brille 32 mit genügend Material ausgestattet und der Schlauch 41 auf geeignete Weise an den Aufrollmechanismus angehängt, um die Zugbewegung zu erhalten. Der Vorrat an Bindemittel in der Dosiervorrichtung im Deckel wird nachgefüllt.

### Bezugszeichenliste

- 1: Toilettenvorrichtung
- 2: Rahmenstruktur
- 20: Gehäuse
- 201: Öffnung
- 202: Abdeckung
- 21: Auffangvorrichtung, Auffangbehälter
- 211: Sack
- 22: Verschliessvorrichtung
- 221: Arm
- 23: Abtrennvorrichtung
- 24: Komprimiervorrichtung
- 241: Saugrohr
- 25: Stützen
- 26: Rollen
- 27: Auffangrolle
- 3: Sitz
- 30: Verschalung
- 31: Schlauchvorrat
- 32: Sitzelement
- 33: Deckel
- 331: Scharnier
- 34: Haltevorrichtung
- 35: Öffnung
- 36: Auffangklappe
- 37: Drehachse
- 41: Folienschlauch
- 42: Ausscheidungsprodukte, Beutelinhalt
- 43, 43': offener Beutel
- 43a, 43a': geschlossener Beutel
- 44: Beutelverschluss
- 45: geschlossenes Ende des Folienschlauchs
- 46: Beutelkette
- 5: Vorrichtung zum Halten und Bewegen des Sitzes
- 51: Hubvorrichtung
- 511: Längsschlitze
- 52: Schiebevorrichtung
- 521: Ausleger
- 53: Schwenkvorrichtung
- 531: Schwenkarm
- 54: Dosiervorrichtung
- 55: Bindemittel
- 6: Benutzer
- 70: Boden
- 71: Wand
- 711: Wandöffnung
- I: erste Position, Entleerungsposition
- II: zweite Position, Sitzposition
- III: dritte Position, Urinalposition

## Patentansprüche

1. Toilettenvorrichtung (1) mit einem Sitz (3) mit einer Öffnung (35), unter der ein zur Aufnahme von menschlichen Ausscheidungsprodukten (42) vorgesehener einseitig verschlossener (44, 45) und gegen die Öffnung (35) des Sitzes hin offener Folienschlauch (41, 43) angebracht ist; Mitteln (23, 24) zum Verschliessen des Folienschlauchs (41, 42) zu einem geschlossenen Beutel (43a) und zum Abtrennen des geschlossenen Beutels (43a), so dass wiederum ein einseitig verschlossener (44) Folienschlauch (41, 43) entsteht; und eine Auffangvorrichtung (21) zur Aufnahme abgetrennter geschlossener Beutel (43a'),
**dadurch gekennzeichnet, dass** die Toilettenvorrichtung eine Vorrichtung zum Halten und Bewegen des Sitzes aufweist, und dass der Sitz (3) von einer ersten Entleerungsposition (I), in welcher er sich über der Auffangvorrichtung (21) befindet, in mindestens eine weitere Benutzungsposition (II, III) bringbar ist, in welcher er sich neben der Auffangvorrichtung (21) befindet.

2. Toilettenvorrichtung nach Anspruch 1, **dadurch gekennzeichnet, dass** der Sitz (3) in eine zweite Position (II) bringbar ist, in welcher er von einem Benutzer (6) in sitzender Position als Toilette benutzbar ist.

3. Toilettenvorrichtung nach einem der vorangehenden Ansprüche, **dadurch gekennzeichnet, dass** der Sitz (3) in eine dritte Position (III) bringbar ist, in welcher er von einem männlichen oder weiblichen Benutzer (6) in stehender Position als Urinal benutzbar ist.

4. Toilettenvorrichtung nach einem der vorangehenden Ansprüche, **dadurch gekennzeichnet, dass** der Sitz (3) in der Höhe beliebig verstellbar ist.

5. Toilettenvorrichtung nach einem der vorangehenden Ansprüche, **gekennzeichnet durch** eine Vorrichtung, mit welcher der Sitz (3) gegenüber der Auffangvorrichtung (21) waagrecht und/oder senkrecht verschiebbar ist, und/oder aus der Horizontalen schwenkbar ist.

6. Toilettenvorrichtung nach einem der vorangehenden Ansprüche, **gekennzeichnet durch** eine Verschliessvorrichtung (23), welche geeignet ist, einen Abschnitt des Folienschlauchs (41, 42) mit einem mechanischen Verschluss (44), beispielsweise einem Clipverschluss, einem Drahtverschluss oder einem Klebbandverschluss, zu einem geschlossenen Beutel (43a') zu verschliessen.

7. Toilettenvorrichtung nach einem der Ansprüche 1 bis 6, **gekennzeichnet durch** eine Verschliessvorrichtung (23), welche geeignet ist, einen Abschnitt des Folienschlauchs (41, 42) thermisch zu einem geschlossenen Beutel (43a') zu verschliessen.

8. Toilettenvorrichtung nach Anspruch 6 oder 7, **dadurch gekennzeichnet, dass** die Verschliessvorrichtung (23) geeignet ist, den Folienschlauch (42) zu einem neuen einseitig offenen Beutel (43) zu verschliessen.

9. Toilettenvorrichtung nach einem der vorangehenden Ansprüche, **gekennzeichnet durch** eine Vorrichtung zur Zudosierung einer Substanz in den offenen Beutel (43) und/oder den Auffangbehälter (21, 211).

10. Toilettenvorrichtung nach einem der vorangehenden Ansprüche, **dadurch gekennzeichnet, dass** der Sitz (3) unterhalb des Beutels (43) ein redundantes Mittel (36) zum Auffangen von Ausscheidungsprodukten (42) aufweist, bevorzugt eine schwenkbar gelagerte Auffangklappe (36).

11. Toilettenvorrichtung nach einem der vorangehenden Ansprüche, **gekennzeichnet durch** eine Abtrennvorrichtung (24), welche geeignet ist, einen zu einem geschlossenen Beutel (43a') verschlossenen Abschnitt des Folienschlauchs (41) von diesem abzutrennen.

12. Toilettenvorrichtung nach einem der vorangehenden Ansprüche, **gekennzeichnet durch** eine Greifvorrichtung (34), mit welcher das geschlossene Ende (45) des Folienschlauchs (41) greifbar und haltbar ist.

13. Toilettenvorrichtung nach einem der vorangehenden Ansprüche, **gekennzeichnet durch** eine Komprimiervorrichtung (24) zum Komprimieren eines Beutels (43a), beispielsweise eine Vorrichtung zum Vakuumieren des Beutels (43a).

14. Toilettenvorrichtung nach einem der vorangehenden Ansprüche, **dadurch gekennzeichnet, dass** die Toilettenvorrichtung (1) als fahrbare Einheit ausgestaltet ist.

15. Toilettenvorrichtung nach einem der vorangehenden Ansprüche, **dadurch gekennzeichnet, dass** die Auffangvorrichtung (21) von der Toilettenvorrichtung (1) abtrennbar ist.

## Claims

1. Toilet system (1) with a seat (3) with an opening (35) under which is arranged a film tube (41, 43) intended for collecting human waste products (42), which is closed on one side (44, 45) and open towards the opening (35) of the seat; means (23, 24) for closing the film tube (41, 42) to form a closed bag (43a) and for separating the closed bag (43a) so that again another film tube (41, 43) open at one end (44) is produced; and a collection device (21) for receiving separated closed bags (43a'),
**characterised in that** the toilet system comprises a device for holding and moving the seat and that the seat (3) can be brought from a first emptying position (I) in which it is above the collection device (21) into at least one further usage position (II, III) in which it is next to the collection device (21).

2. Toilet system according to claim 1 **characterised in that** the seat (3) can be brought into a second position (II) in which it can be used as a toilet by a user (6) in a sitting position.

3. Toilet system according to any one of the preceding claims **characterised in that** the seat (3) can be brought into a third position (III) in which it can be used as a urinal by a male or female user (6) in a standing position.

4. Toilet system according to any one of the preceding claims **characterised in that** the height of the seat (3) can be adjusted arbitrarily.

5. Toilet system according to any one of the preceding claims **characterised by** a device with which the seat (3) is horizontally and/or vertically displaceable with regard to the collection device (21) and/or pivotable from the horizontal.

6. Toilet system according to any one of the preceding claims **characterised by** a closing device (23) which is suitable for closing a section of the film tube (41, 42) with a mechanical closure (44), for example a clip closure, a wire closure or an adhesive tape closure, to form a closed bag (43a').

7. Toilet system according to any one of claims 1 to 6 **characterised by** a closure device (23) which is suitable for thermally closing a section of the film tube (41, 42) to form a closed bag (43a').

8. Toilet system according to claim 6 or 7 **characterised in that** the closure device (23) is suitable for closing the film tube (42) to form a new bag (43) open on one side.

9. Toilet system according to any one of the preceding claims **characterised by** a device for dosing a substance into the open bag (43) and/or the collection container (21, 211).

10. Toilet system according to any one of the preceding claims **characterised in that** under the bag (43) the seat (3) has a redundant means (36) for collecting waste products (42), preferably a pivotably mounted collection flap (36).

11. Toilet system according to any one of the preceding claims **characterised by** a separating device (24) which is suitable for separating from the film tube (41) a closed section thereof forming a closed bag (43a').

12. Toilet system according to any one of the preceding claims **characterised by** a grip device (34) with which the closed end (45) of the film tube (41) can be gripped and held.

13. Toilet system according to any one of the preceding claims **characterised by** a compressing device (24) for compressing a bag (43a), for example a device for evacuating the bag (43a).

14. Toilet system according to any one of the preceding claims **characterised in that** the toilet system (1) is designed as a mobile unit.

15. Toilet system according to any one of the preceding claims **characterised in that** the collection device (21) is detachable from the toilet system (1).

## Revendications

1. Système de toilettes (1) comportant un siège (3) avec une ouverture (35) sous laquelle est monté un film tubulaire (41, 43) fermé (44, 45) d'un côté et ouvert en direction de l'ouverture (35) du siège, prévu pour recevoir des excréments (42) humains ; des moyens (23, 24) destinés à fermer le film tubulaire (41, 42) en un sachet (43a) fermé et à sectionner le sachet (43a) fermé, de sorte qu'il en résulte de nouveau un film tubulaire (41, 43) fermé (44) d'un côté ; et un dispositif collecteur (21) destiné à recevoir des sachets (43a') fermés sectionnés,
**caractérisé en ce que** le système de toilettes comporte un dispositif destiné à retenir et à déplacer le siège et **en ce que** le siège (3) peut être amené d'une première position de vidange (I) dans laquelle il se trouve au-dessus du dispositif collecteur (21) dans au moins une autre position d'utilisation (II, III), dans laquelle il se trouve à côté du dispositif collecteur (21).

2. Système de toilettes selon la revendication 1, **caractérisé en ce que** le siège (3) peut être amené dans une deuxième position (II), dans laquelle il est utilisable en tant que toilettes par un utilisateur (6) en position assise.

3. Système de toilettes selon l'une quelconque des revendications précédentes, **caractérisé en ce que** le siège (3) peut être amené dans une troisième position (III) dans laquelle il peut être utilisé en tant qu'urinoir par un utilisateur (6) masculin ou féminin en position debout.

4. Système de toilettes selon l'une quelconque des revendications précédentes, **caractérisé en ce que** le siège (3) est réglable à volonté en hauteur.

5. Système de toilettes selon l'une quelconque des revendications précédentes, **caractérisé par** un dispositif à l'aide duquel le siège (3) peut être déplacé à l'horizontale et/ou à la verticale par rapport au dispositif collecteur (21) et/ou pivoté à partir de l'horizontale.

6. Système de toilettes selon l'une quelconque des revendications précédentes, **caractérisé par** un dispositif de fermeture (23), lequel est apte à fermer un tronçon du film tubulaire (41, 42) en un sachet (43a') fermé, avec une fermeture mécanique (44), par exemple une fermeture par clip, une fermeture par fil métallique ou une fermeture par ruban adhésif.

7. Système de toilettes selon l'une quelconque des revendications 1 à 6, **caractérisé par** un dispositif de fermeture (23), lequel est apte à fermer par voie thermique un tronçon de film tubulaire (41, 42) en un sachet (43a') fermé.

8. Système de toilettes selon la revendication 6 ou la revendication 7, **caractérisé en ce que** le dispositif de fermeture (23) est apte à fermer le film tubulaire (42) en un nouveau sachet (43) ouvert d'un côté.

9. Système de toilettes selon l'une quelconque des revendications précédentes, **caractérisé par** un dispositif destiné à l'alimentation dosée d'une substance dans le sachet (43) ouvert et/ou dans le réservoir collecteur (21, 211).

10. Système de toilettes selon l'une quelconque des revendications précédentes, **caractérisé en ce que** sous le sachet (43), le siège (3) comporte un moyen (36) redondant destiné à collecter des excréments (42), de préférence un clapet collecteur (36) logé de manière pivotante.

11. Système de toilettes selon l'une quelconque des revendications précédentes, **caractérisé par** un dispositif de sectionnement (24), lequel est apte à sectionner du film tubulaire (41) un tronçon fermé en un sachet (43a') fermé.

12. Système de toilettes selon l'une quelconque des revendications précédentes, **caractérisé par** un dispositif de préhension (34), à l'aide duquel l'extrémité (45) fermée du film tubulaire (41) peut être saisie et maintenue.

13. Système de toilettes selon l'une quelconque des revendications précédentes, **caractérisé par** un dispositif de compression (24) destiné à comprimer un sachet (43a), par exemple un dispositif de mise sous vide du sachet (43a).

14. Système de toilettes selon l'une quelconque des revendications précédentes, **caractérisé en ce que** le système de toilettes (1) est conçu en tant qu'unité roulante.

15. Système de toilettes selon l'une quelconque des revendications précédentes, **caractérisé en ce que** le dispositif collecteur (21) est séparable du système de toilettes (1).
